(19) Europäisches Patentamt
European Patent Office
Office européen des brevets

(11) Veröffentlichungsnummer: **0 168 713 B1**

(12) **EUROPÄISCHE PATENTSCHRIFT**

(45) Veröffentlichungstag der Patentschrift: **11.09.91**

(51) Int. Cl.⁵: **C08G 77/38**, C08L 83/04, C09J 7/02, C09D 183/04, //D21H19/10,B32B27/16

(21) Anmeldenummer: **85108214.9**

(22) Anmeldetag: **03.07.85**

Die Akte enthält technische Angaben, die nach dem Eingang der Anmeldung eingereicht wurden und die nicht in dieser Patentschrift enthalten sind.

# (54) (Meth)acrylsäureestermodifizierte Organopolysiloxangemische, deren Herstellung und Verwendung als abhäsive Beschichtungsmassen.

(30) Priorität: **14.07.84 DE 3426087**

(43) Veröffentlichungstag der Anmeldung:
**22.01.86 Patentblatt 86/04**

(45) Bekanntmachung des Hinweises auf die Patenterteilung:
**11.09.91 Patentblatt 91/37**

(84) Benannte Vertragsstaaten:
**BE CH DE FR GB LI NL SE**

(56) Entgegenhaltungen:
**DE-A- 2 747 233**
**US-A- 4 201 808**

(73) Patentinhaber: **Th. Goldschmidt AG**
**Goldschmidtstrasse 100 Postfach 101461**
**W-4300 Essen 1(DE)**

(72) Erfinder: **Weitemeyer, Christian, Dr.**
**Sundernholz 67**
**W-4300 Essen(DE)**
Erfinder: **Jachmann, Jürgen**
**Mont-Cenis-Strasse 265**
**W-4690 Herne(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft (meth)acrylsäureestermodifizierte Organopolysiloxangemische, deren Herstellung und die Verwendung dieser Gemische als abhäsive Beschichtungsmassen. Die Bezeichnung (Meth)-acrylsäureester soll dabei sowohl die Acrylsäureester wie die Methacrylsäureester umfassen.

Aus der DE-PS 27 47 233 ist ein Verfahren zur Herstellung von mit (Meth)acrylsäureestern modifizierten Organopolysiloxanen durch Umsetzung von -COH-Gruppen aufweisenden (Meth)acrylsäureestern mit Organopolysiloxanen, die SiX-Gruppen (X = Alkoxy, Hydroxyl oder Chlor) aufweisen, gegebenenfalls in Gegenwart von Katalysatoren, bekannt. Dieses Verfahren ist dadurch gekennzeichnet, daß man als Organopolysiloxane solche der Formel

$$R^1_a-\underset{\underset{O_{\frac{4-(a+b)}{2}}}{|}}{Si}-X_b$$

$R^1$ = Alkylgruppe mit 1 bis 4 C-Atomen und/oder eine Phenylgruppe;
X = Chlor oder eine $OR^2$-Gruppe;
$R^2$ = Alkylgruppe mit 1 bis 4 C-Atomen und/oder Wasserstoff;
a = 1,0 bis 2,0;
b = 0,02 bis 1,6;
$a+b \leqq 2{,}66$;

wobei das Siloxanmolekül 3 bis 100 Si-Atome aufweist und als (Meth)acrylsäureester Pentaerythrittri(meth)-acrylat verwendet, wobei, bezogen auf COH- und SiX-Gruppen, 0,05 Mol bis äquimolare Mengen des Pentaerythritesters eingesetzt werden.

Diese Verbindungen lassen sich nach Zusatz bekannter Initiatoren durch UV-Strahlung in kürzester Zeit aushärten. Die Aushärtungszeit liegt dabei meist unter einer Sekunde. Diese Verbindungen lassen sich deshalb z.B. als Bindemittel oder Bindemittelzusätze für Druckfarben verwenden, wobei die Druckfarben durch die UV-Härtung auf dem Träger fixiert werden und gleichzeitig hydrophob sind. Dies ist bei Druckfarben, deren Hydrophobie drucktechnisch ausgenutzt werden soll, von besonderer Bedeutung.

Die Verbindungen können aber auch zur Herstellung von Lackbindemitteln oder anderen Beschichtungsmitteln verwendet werden, z.B. als Grundkörper oder Zusatzmittel für die Beschichtung von Papier, Holz- oder Metalloberflächen. Auch hierbei ist die oft auf Bruchteile einer Sekunde reduzierte Aushärtungszeit anwendungstechnisch von besonderer Bedeutung.

Es ist dabei aus der DE-PS 27 47 233 ebenfalls bekannt, zur Beeinflussung der Eigenschaften und/oder zur Verbilligung der Systeme diesen Verbindungen weitere härtbare, ungesättigte Verbindungen, die zur Copolymerisation befähigt sind, zuzusetzen.

Aus der DE-OS 29 48 708 ist ferner ein Verfahren zur Herstellung von Organopolysiloxanen, die als Wirkstoffe für abhäsive Beschichtungsmassen für flächige Träger, insbesondere Papier oder Kunststoffolien geeignet sind, durch Umsetzung von Organopolysiloxanen, welche SiCl-Gruppen aufweisen, mit Pentaerythrittriacrylat oder Pentaerythrittrimethacrylat, gegenbenenfalls unter Zusatz von HCl-bindenden Neutralisationsmitteln, bekannt, dessen Kennzeichen darin besteht, daß man

a) als Organopolysiloxane solche der Formel

$$R^1_a-\underset{\underset{O_{\frac{4-(a+b)}{2}}}{|}}{Si}-Cl_b$$

verwendet, in der $R^1$ eine Alkylgruppe mit 1 bis 4 Kohlenstoffatomen, eine Vinyl- und/oder eine Phenylgruppe ist, mit der Maßgabe, daß mindestens 90 Mol-% der Gruppen $R^1$ Methylgruppen sind, a einen Wert von 1,8 bis 2,2 und b einen Wert von 0,004 bis 0,5 hat und

b) die Umsetzung mit mindestens äquimolaren Mengen Pentaerythrittriacrylat oder Pentaerythrittrimethacrylat durchführt und

c) das Verfahrensprodukt von in diesem suspendierten festen Bestandteilen in an sich bekannter Weise

abtrennt.

Eine Abänderung des Verfahrens ist dadurch gekennzeichnet, daß man die Organochlorsiloxane zunächst mit, bezogen auf SiCl-Gruppen, mindestens 2molaren Mengen eines Dialkylamins, dessen Alkylgruppen jeweils 3 bis 5 C-Atome aufweisen und wobei die dem Stickstoff benachbarten C-Atome höchstens jeweils ein Wasserstoffatom tragen, umsetzt und das Umsetzungsprodukt mit Pentaerythrittriacrylat oder Pentaerythrittrimethacrylat reagieren läßt.

Diese Verbindungen können ebenfalls als Beschichtungsmassen verwendet und durch UV-Strahlung in Gegenwart von Radikalstartern ausgehärtet werden. Sie weisen nach der Aushärtung abhäsive Eigenschaften auf.

Es hat sich jedoch in der Praxis gezeigt, daß diese bekannten (meth)acrylsäureestermodifizierten Organopolysiloxane nicht alle Anforderungen, die bei ihrem praktischen Einsatz gestellt werden, erfüllen. Es ist insbesondere erwünscht, die Haftung der Harze am Untergrund zu erhöhen, gleichzeitig aber die abhäsiven Oberflächeneigenschaften zu verbessern. Die Verbindungen sollen nach der Aushärtung insbesondere abhäsiv gegenüber Klebstoffen sein, so daß sich die Harze besonders zur Beschichtung von Papieren eignen, auf denen z.B. Etiketten ablösbar haften.

Überraschenderweise hat sich gezeigt, daß diese Eigenschaftskombination bei (meth)-acrylsäureestermodifizierten Organopolysiloxangemischen zu finden ist, welche eine bestimmte Molekulargewichtsverteilung aufweisen. Die Verbindungen müssen dabei abweichend von einer der Äquilibrierung entsprechenden Molekulargewichtsverteilung besondere Gehalte an niedrig- und hochmolekularen Anteilen aufweisen. Diese Molekulargewichtsverteilung kann durch die durchschnittliche Anzahl der Si-Atome der in dem Organopolysiloxangemisch enthaltenen Individuen angegeben werden.

Gegenstand der Erfindung sind somit (meth)acrylsäureestermodifizierte Organopolysiloxangemische, welche dadurch gekennzeichnet sind, daß sie aus einem im wesentlichen äquilibrierten Organopolysiloxan mit im Mittel > 25 bis < 200 Si-Atomen bestehen und zusätzlich 2 bis 30 Gew.-% Organopolysiloxane mit im Mittel 2 bis 25 Si-Atomen und 2 bis 30 Gew.-% Organopolysiloxane mit im Mittel 200 bis 2000 Si-Atomen enthalten.

Besonders bevorzugt sind solche (meth)acrylsäureestermodifizierten Organopolysiloxangemische, welche neben einem im wesentlichen äquilibrierten Organopolysiloxan mit im Mittel > 25 bis < 200 Si-Atomen 5 bis 20 Gew.-% Organopolysiloxane mit im Mittel 5 bis 25 Si-Atomen und 5 bis 20 Gew.-% Organopolysiloxane mit im Mittel 200 bis 2000 Si-Atomen enthalten.

Die in den erfindungsgemäßen Organopolysiloxangemischen enthaltenen Organopolysiloxane entsprechen vorzugsweise der allgemeinen Formel

$$\begin{array}{c} R_a\text{-}Si\text{-}Q_b \\ | \\ O_{\frac{4-(a+b)}{2}} \end{array}$$

R ist ein Alkylrest mit 1 bis 4 Kohlenstoffatomen, vorzugsweise der Methylrest. R kann aber auch die Bedeutung eines Vinyl- oder Phenylrestes haben. Dabei kann der Rest R jedoch im Molekül unterschiedliche Bedeutung haben, so daß einzelne Reste R die Bedeutung eines Methylrestes und die anderen Reste R z. B. die Bedeutung eines Vinyl- oder eines Phenylrestes haben können. Vorzugsweise sind mindestens 90 % der Reste R Alkylreste, insbesondere Methylreste.

Q ist ein organischer Rest, der (Meth)acrylsäureestergruppen enthält. Der (Meth)acrylsäureesterrest ist mit dem Si-Atom vorzugsweise durch eine SiOC-Brücke verbunden. Der (Meth)acrylsäureesterrest kann sich dabei von Pentaerythrittriacrylat, Pentaerythrittrimethacrylat, Dipentaerythritpentaacrylat, Dipentaerythritpentamethacrylat, Ditrimethylolpropantriacrylat, Ditrimethylolpropantrimethacrylat, Ditrimethylolethantriacrylat, Ditrimethylolethantrimethacrylat, Trimethylolpropandi(meth)acrylat, Trimethylolethandi(meth)acrylat, Glycerindi(meth)acrylat, Hydroxyethylacrylat, Hydroxypropylacrylat, Neopentylglykolmonoacrylat ableiten.

Der (Meth)acrylsäureesterrest kann aber auch durch eine SiC-Brücke mit dem Organopolysiloxan verbunden sein.

a hat einen Wert von 1,0 bis 2,2; b hat einen Wert von 0,001 bis 1,6.

Die in den erfindungsgemäßen (meth)acrylsäureestermodifizierten Organopolysiloxangemischen enthaltenen Fraktionen unterschiedlichen mittleren Molekulargewichtes können sich in bezug auf die Reste R und Q und die Indices a und b unterscheiden.

In der US-A-4 201 808 ist eine Beschichtungsmasse auf Silikonbasis beschrieben, welche

a) 10 bis 90 Gew.-% eines (meth)acrylsäureestermodifizierten Polysiloxans mit mindestens 25 Si-Einheiten,

b) 90 bis 10 Gew.-% eines di-, tri- oder tetrafunktionellen (Meth)acrylsäureesters als Vernetzer und

c) 0 bis 10 Gew.-% eines Photosensibilisierungsmittels enthält.

Der Vernetzer kann ein niedrig molekulares acrylatmodifiziertes Siloxan sein.

Es hat sich gezeigt, daß die Haftung der Organopolysiloxane an einem Substrat durch den Gehalt an relativ niedermolekularen Anteilen verbessert wird, während die Abhäsivität der modifizierten Siloxane durch den Gehalt an hochmolekularen Anteilen zunimmt. Zur Erzielung der gewünschten Eigenschaftskombination ist es aber notwendig, daß die in bezug auf ihr Molekulargewicht unterschiedlichen drei Fraktionen nebeneinander vorliegen. Die gewünschte Eigenschaftskombination wird nicht erhalten, wenn eine der drei Fraktionen im Organopolysiloxangemisch nicht in der angegebenen Menge enthalten ist.

Die erfindungsgemäßen (meth)acrylsäureestermodifizierten Organopolysiloxangemische können nach aus dem Stand der Technik bekannten Verfahren hergestellt werden. Bevorzugt ist dabei die Verfahrensweise gemäß der DE-PS 27 47 233. Das bevorzugte Verfahren ist dadurch gekennzeichnet, daß man Organopolysiloxane der allgemeinen Formel

$$R_a\text{-}\underset{\underset{O_{\frac{4-(a+b)}{2}}}{|}}{Si}\text{-}X_b$$

wobei R ein Alkylrest mit 1 bis 4 C-Atomen, ein Vinylrest und/oder ein Phenylrest,

X ein hydrolysierbarer Rest oder ein Hydroxylrest ist,

a einen Wert von 1,0 bis 2,2,

b einen Wert von 0,001 bis 1,6 hat,

mit Hydroxylgruppen enthaltenden (Meth)acrylsäureestern, vorzugsweise in äquimolaren Mengen, bezogen auf COH- und SiX-Gruppen, umsetzt, wobei man entweder

a) Organopolysiloxangemische verwendet, welche im wesentlichen äquilibrierte Organopolysiloxane mit im Mittel > 25 und < 200 Si-Atomen und zusätzlich niedrigermolekulare Organopolysiloxane mit im Mittel 2 bis 25 Si-Atomen und höhermolekulare Organopolysiloxane mit im Mittel 200 bis 2000 Si-Atomen in solchen Mengen enthalten, daß nach der Umsetzung mit den (Meth)acrylsäureestern die niedrigermolekularen und die höhermolekularen modifizierten Organopolysiloxane jeweils in Mengen von 2 bis 30 Gew.-%, bezogen auf Gesamtgewicht, vorliegen,

oder

b) die niedrig-, mittel- und hochmolekularen Organopolysiloxane getrennt umsetzt und die Umsetzungsprodukte in den geforderten Gewichtsverhhältnissen mischt.

Bei der ersten Verfahrensvariante führt man die Umsetzung mit einem Organopolysiloxangemisch durch, welches bereits die gewünschte Molekulargewichtsverteilung aufweist. Da diese Verteilung sich von der statistischen Verteilung, die sich durch eine Äquilibrierung einstellt, unterscheidet, ist es notwendig, die einzelnen Organopolysiloxanfraktionen getrennt herzustellen und in den gewünschten Mengenverhältnissen zu vermischen. Nach der ersten Verfahrensvariante wird dieses Gemisch mit Hydroxylgruppen enthaltenden (Meth)acrylsäureestern, wie z.B. Pentaerythrittriacrylat, Pentaerythrittrimethacrylat, Dipentaerythritpentaacrylat oder Dipentaerythritpentamethacrylat, umgesetzt. Die Umsetzung erfolgt vorzugsweise in äquimolaren Mengen, bezogen auf COH- und SiX-Gruppen. Man kann jedoch auch die Mengen der Reaktionspartner so wählen, daß einer COH-Gruppe 0,7 bis 0,99 SiX-Gruppen entsprechen.

Bei der zweiten Variante des erfindungsgemäßen Verfahrens setzt man die einzelnen Organopolysiloxanfraktionen getrennt mit den (Meth)acrylsäureestern in an sich bekannter Weise um und vermischt die jeweiligen Umsetzungsprodukte in den geforderten Gewichtsverhältnissen. In beiden Fällen wird die gleiche vorteilhafte Eigenschaftskombination erhalten.

Die erfindungsgemäßen Organopolysiloxane können alleine oder in Mischung mit anderen zur Copolymerisation befähigten, ungesättigten Verbindungen, wie z.B. mono-, oligo- oder polymeren Epoxy-, Ester- oder Urethanacrylaten und -methacrylaten, Estern ungesättigter Dicarbonsäuren, Allylestern sowie anderen vinylischen Verbindungen, wie Vinylaromaten oder Vinyllactamen, verwendet werden.

Es ist bei Härtung durch ultraviolette Strahlung notwendig, diesen Gemischen einen Radikalstarter, vorzugsweise in Mengen von 2 bis 10 Gew.-%, bezogen auf modifiziertes Siloxan, zuzusetzen. Die Wahl des Radikalstarters muß entsprechend dem Wellenlängenspektrum der zur Aushärtung verwendeten UV-Strahlenquelle erfolgen. Derartige Radikalstarter sind bekannt. Man kann z.B. Benzophenon, dessen Oxime oder Benzoinether, jedoch auch andere hierfür bekannte Verbindungen verwenden. Ohne Zusatz von

Initiatoren lassen sich die erfindungsgemäßen Organopolysiloxangemische z.B. durch Laserlicht, Elektronenstrahlen, γ-Strahlen aushärten.

Es ist möglich, die so erhaltene Beschichtungsmasse noch durch Zusatz weiterer Produkte zu modifizieren. Derartige Modifizierungsmittel sind z.B. Siloxane mit Gruppen, welche bei der Aushärtung der Beschichtungsmasse in diese chemisch eingebaut werden. Besonders geeignete Modifizierungsmittel sind Siloxane mit an Si-Atomen gebundenen Wasserstoffatomen. Diese können u.a. eine Erniedrigung der Viskosität der Beschichtungsmassen bewirken, wodurch ihre Auftragbarkeit auf flächige Träger verbessert wird. Die Zusatzmenge richtet sich nach dem gewünschten Effekt und beträgt meist 5 bis 40 Gew.-%, bezogen auf modifiziertes Siloxan.

Weitere mitverwendbare Modifizierungsmittel sind in der DE-AS 26 02 809 und der DE-OS 32 18 675 genannt.

Außerdem können auch Feststoffe zugesetzt werden, um die Viskosität oder die Oberfläche zu verändern. Dazu gehören insbesondere hochdisperse Kieselsäuren oder organische Polymerisate aus Fluorkohlenwasserstoffen u.a.

Die Herstellung der erfindungsgemäßen Verbindungen wird am Beispiel der Herstellung Pentaerythrittriacrylat-modifizierter Organopolysiloxane näher erläutert:

Zu einer Menge Toluol, die zu einer ca. 40 %igen toluolischen Lösung des Endproduktes führt, werden 1,1 Mol Diisopropylamin gegeben, sodann bei 70 °C 1 Val des gewünschten Chlorsiloxans zugetropft und danach 1 h bei dieser Temperatur gerührt. Anschließend werden als Inhibitor 0,5 g Kupferpulver zugesetzt. Dann wird 1 Mol Pentaerythrittriacrylat zugetropft und 40 Min. nachgerührt. Der entstandene Niederschlag wird abfiltriert und das Filtrat erneut mit 0,5 g Kupferpulver versetzt. Das Lösungsmittel wird im Wasserstrahlpumpenvakuum bis zu einer maximalen Sumpftemperatur von 80 °C abdestilliert. Zum Schluß erfolgt Druckfiltration über eine Filterpresse.

Es ergeben sich nach diesem Verfahren folgende Viskositäten für Produkte aus α,ω-Dichlor-dimethylpolysiloxanen mit einer im Molekül durchschnittlichen Anzahl von

| | | |
|---|---|---|
| 10 Si-Atomen: | 397 mPas | modifiziertes Siloxan I |
| 120 Si-Atomen: | 1483 mPas | modifiziertes Siloxan II |
| 400 Si-Atomen: | 12 100 mPas | modifiziertes Siloxan III |

Die Viskosität einer Mischung dieser Produkte im Verhältnis 1 : 8 : 1 beträgt 1675 mPas (Verfahren b)).

Ein Gemisch von α,ω-Dichlor-dimethylpolysiloxanen mit einer im Molekül durchschnittlichen Anzahl von 10, 120 und 400 Si-Atomen im Verhältnis 1 : 12,6 : 1,6 ergibt nach Umsetzung mit Pentaerythrittriacrylat gemäß obiger Herstellvorschrift ein Produkt der Viskosität 1710 mPas (Verfahren a)).

Zur Überprüfung der anwendungstechnischen Eigenschaften werden die modifizierten Siloxane I, II und III jeweils einzeln und in Form ihrer Mischungen A bis F sowie in Form eines durch Reaktion gemäß Patentanspruch 2, Variante a), hergestellten Gemisches modifizierter Siloxane G miteinander verglichen.

Dazu werden die Zubereitungen I, II, III und A bis G auf satiniertes Papier aufgebracht und bei 1,5 Mrad durch Elektronenstrahlen gehärtet. Die Auftragsmenge beträgt ca. 1,1 g/m$^2$. Als Prüfkleber mit den Bezeichnungen X, Y und Z werden ein Acrylat- und ein Kautschukklebeband sowie eine wäßrige Acrylatdispersion, die nach Trocknung mit einem Etikettenpapier bedeckt wird, verwendet. Dann werden nach 24 h Lagerung bei 70 °C jeweils 3 cm breite Streifen abgezogen und die dazu erforderliche Kraft in N ermittelt. Außerdem erfolgt eine Prüfung auf Adhäsion auf dem Substrat durch kräftiges Reiben mit dem Daumen. Bei mangelnder Haftung bilden sich gummiartige Krümel (sogenannter "rub off"-Test).

Tabelle

| modif. Siloxan | mittlere Anzahl der Si-Atome im Polysiloxan | | | Prüfkleber | | | Rub off | Bemerkungen |
|---|---|---|---|---|---|---|---|---|
| | 10 | 120 | 400 | X | Y | Z | | |
| I | 100 Gew.-% | - | - | > 3,5 | > 3,5 | > 3,5 | nein | Papier reißt |
| II | - | 100 Gew.-% | - | 0,25 | 0,7 | 0,55 | ja | |
| III | - | - | 100 Gew.-% | 0 | 0 | 0 | - | nicht ausgehärtet |
| A | 5 Gew.-% | 95 Gew.-% | - | 0,25 | 0,75 | 0,6 | nein | |
| B | - | 95 Gew.-% | 5 Gew.-% | 0,15 | 0,6 | 0,5 | ja | |
| C* | 5 Gew.-% | 90 Gew.-% | 5 Gew.-% | 0,15 | 0,6 | 0,55 | nein | |
| D* | 10 Gew.-% | 80 Gew.-% | 10 Gew.-% | 0,05 | 0,45 | 0,3 | nein | |
| E* | 20 Gew.-% | 60 Gew.-% | 20 Gew.-% | 0,05 | 0,4 | 0,35 | nein | |
| F | 40 Gew.-% | 20 Gew.-% | 40 Gew.-% | 0 | 0 | 0 | - | nicht ausgehärtet |
| G* | 10 Gew.-% | 80 Gew.-% | 10 Gew.-% | 0,05 | 0,45 | 0,3 | nein | |

* erfindungsgemäß

Aus der Tabelle ergibt sich, daß mit Acrylsäureestern modifizierte Organopolysiloxane nur dann Beschichtungsmassen der gewünschten Eigenschaftskombination ergeben, wenn sie gemäß vorliegender Erfindung zusammengesetzt sind (Mischung C, D, E und G). Bei zu geringem Gehalt an niedrigmolekularen Komponenten tritt mangelnde Haftung zum Substrat auf. Fehlt im Gemisch die höhermolekulare Komponente, ist die Abhäsivität des Gemisches unzureichend. Ist der Gehalt an niedrigmolekularer und hochmolekularer Komponente zu groß, härtet das Gemisch unter den angegebenen Bedingungen nicht aus.

**Patentansprüche**

1. (Meth)acrylsäureestermodifizierte Organopolysiloxangemische mit verbesserten abhäsiven Eigenschaften, dadurch gekennzeichnet, daß sie aus einem im wesentlichen äquilibrierten Organopolysiloxan mit im Mittel > 25 bis < 200 Si-Atomen bestehen und zusätzlich 2 bis 30 Gew.-% Organopolysiloxane mit im Mittel 2 bis 25 Si-Atomen und 2 bis 30 Gew.-% Organopolysiloxane mit im Mittel 200 bis 2000 Si-Atomen enthalten.

2. Verfahren zur Herstellung der (meth)acrylsäureestermodifizierten Organopolysiloxangemische nach Anspruch 1, dadurch gekennzeichnet, daß man Organopolysiloxane der allgemeinen Formel

$$R_a\text{-}\underset{\displaystyle O_{\frac{4-(a+b)}{2}}}{\underset{|}{Si}}\text{-}X_b$$

wobei R ein Alkylrest mit 1 bis 4 C-Atomen, ein Vinylrest und/oder ein Phenylrest,
X ein hydrolysierbarer Rest oder ein Hydroxylrest ist,
a einen Wert von 1,0 bis 2,2,
b einen Wert von 0,001 bis 1,6 hat,
mit Hydroxylgruppen enthaltenden (Meth)acrylsäureestern, vorzugsweise in äquimolaren Mengen, bezogen auf COH- und SiX-Gruppen, umsetzt, wobei man entweder
a) Organopolysiloxangemische verwendet, welche im wesentlichen äquilibrierte Organopolysiloxane mit im Mittel > 25 und < 200 Si-Atomen und zusätzlich niedrigermolekulare Organopolysiloxane mit im Mittel 2 bis 25 Si-Atomen und höhermolekulare Organopolysiloxane mit im Mittel 200 bis 2000 Si-Atomen in solchen Mengen enthalten, daß nach der Umsetzung mit den (Meth)acrylsäureestern die niedrigermolekularen und die höhermolekularen modifizierten Organopolysiloxane jeweils in Mengen von 2 bis 30 Gew.-%, bezogen auf Gesamtgewicht, vorliegen,
oder
b) die niedrig-, mittel- und hochmolekularen Organopolysiloxane getrennt umsetzt und die Umsetzungsprodukte in den geforderten Gewichtsverhältnissen mischt.

3. Verwendung der (meth)acrylsäureestermodifizierten Polysiloxangemische nach Anspruch 1 als abhäsive Beschichtungsmassen.

**Claims**

1. (Meth)acrylate-modified organopolysiloxane mixtures having improved abhesive properties, characterised in that they comprise an essentially equilibrated organopolysiloxane having on average > 25 to < 200 Si atoms and additionally 2 to 30% by weight of organopolysiloxanes having on average 2 to 25 Si atoms and 2 to 30% by weight of organopolysiloxanes having on average 200 to 2000 Si atoms.

2. Process for the preparation of the (meth)acrylate-modified organopolysiloxane mixtures according to Claim 1, characterised in that organopolysiloxanes of the general formula

$$R^1_a\text{-}\underset{\displaystyle O_{\frac{4-(a+b)}{2}}}{\underset{|}{Si}}\text{-}X_b$$

where
R is an alkyl radical having 1 to 4 C atoms, a vinyl radical and/or a phenyl radical,

X is a hydrolysable radical or a hydroxyl radical,
a has a value of 1.0 to 2.2, and
b has a value of 0.001 to 1.6,

are reacted with (meth)acrylates containing hydroxyl groups, preferably in equimolar amounts, based on COH and Six groups, where either

a) organopolysiloxane mixtures are used which essentially contain equilibrated organopolysiloxanes having on average > 25 to < 200 Si atoms and additionally lower-molecular-weight organopolysiloxanes having on average 2 to 25 Si atoms and higher-molecular-weight organopolysiloxanes having on average 200 to 2000 Si atoms in such amounts that, after the reaction with the (meth)acrylates, the lower-molecular-weight and the higher-molecular-weight, modified organopolysiloxanes are each present in amounts of 2 to 30% by weight, based on the total weight,

or

b) the low-, medium- and high-molecular-weight organopolysiloxanes are reacted separately and the reaction products are mixed in the weight ratios required.

3. Use of the (meth)acrylate-modified polysiloxane mixtures according to Claim 1 as abhesive coating compositions.

## Revendications

1. Mélanges d'organopolysiloxanes modifiés par des esters de l'acide (méth)acrylique, présentant des propriétés anti-adhésives améliorées, caractérisés en ce qu'ils sont composés d'un organopolysiloxane pratiquement équilibré, contenant en moyenne plus de 25 et moins de 200 atomes de Si, et, en plus, 2 à 30 % en poids d'organopolysiloxanes contenant en moyenne 2 à 25 atomes de Si, et 2 à 30 % en poids d'organopolysiloxanes contenant en moyenne 200 à 2000 atomes de Si.

2. Procédé de préparation de mélanges d'organopolysiloxanes modifiés par des esters de l'acide (méth)-acrylique selon la revendication 1, caractérisé en ce qu'on fait réagir des organopolysiloxanes de formule générale

$$R_a-\underset{\underset{O_{\frac{4-(a+b)}{2}}}{|}}{Si}-X_b$$

dans laquelle

R représente un radical alcoyle ayant de 1 à 4 atomes de carbone, un radical vinyle et/ou un radical phényle,
X représente un radical hydrolysable ou un radical hydroxyle,
a vaut de 1,0 à 2,2,
b vaut de 0,001 à 1,6,

avec des esters de l'acide (méth)acrylique contenant des groupes hydroxyle, de préférence en quantités équimolaires, par rapport aux groupes COH et Six, procédé dans lequel :

a) soit on utilise des mélanges d'organopolysiloxanes qui contiennent des organopolysiloxanes pratiquement équilibrés, ayant en moyenne plus de 25 et moins de 200 atomes de Si, et, en plus, des organopolysiloxanes de poids moléculaire plus faible, ayant en moyenne de 2 à 25 atomes de Si, et des organopolysiloxanes de poids moléculaire plus élevé, ayant en moyenne de 200 à 2.000 atomes de Si, dans des proportions telles qu'après réaction avec les esters de l'acide (méth)-acrylique, les organopolysiloxanes modifiés de poids moléculaire plus faible et de poids moléculaire plus élevé sont contenus respectivement selon des quantités de 2 à 30 % en poids, par rapport au poids total.

b) soit on fait réagir séparément les organopolysiloxanes de poids moléculaire faible, moyen et élevé, et on mélange les produits réactionnels selon les rapports en poids exigés.

3. Utilisation des mélanges de polysiloxanes modifiés par des esters de l'acide (méth)acrylique selon la revendication 1 comme compositions de revêtement anti-adhésives.